# EUROPEAN PATENT SPECIFICATION

(11) **EP 3 145 120 B1**
(45) Date of publication and mention of the grant of the patent: **10.04.2019**
(21) Application number: 14892142.2
(22) Date of filing: 16.10.2014
(51) Int. Cl.: H04L 12/24, H04L 29/06, H04L 12/801

(54) **DATA ACQUISITION METHOD, DEVICE AND SYSTEM**
DATENERFASSUNGSVERFAHREN, -VORRICHTUNG UND -SYSTEM
PROCÉDÉ, DISPOSITIF ET SYSTÈME D'ACQUISITION DE DONNÉES

(30) Priority: 13.05.2014 CN 201410202112
(43) Date of publication of application: 22.03.2017
(73) Proprietor: ZTE Corporation, Shenzhen, Guangdong 518057 (CN)
(72) Inventor: GUO, Yueshan, Shenzhen Guangdong 518057 (CN); DING, Hui, Shenzhen Guangdong 518057 (CN); XIE, Tingting, Shenzhen Guangdong 518057 (CN)
(74) Representative: Aipex B.V.
(86) International application number: PCT/CN2014/088777
(87) International publication number: WO 2015/172512

(56) References cited:
- WO-A1-2013/121399
- CN-A- 101 789 963
- CN-A- 102 523 605
- CN-A- 103 563 430
- US-A1- 2013 339 825
- US-B1- 6 430 188

## Description

### TECHNICAL FIELD

The present disclosure relates to the field of communications, and particularly relates to a data acquisition method, device and system.

### BACKGROUND

In a communication network, in order to achieve specific functions, it is often required to perform data transmission between multiple network elements; and when a greater amount of data are needed to be transmitted, an existing transmission mode is likely to cause communication channel congestion, system instability, data packet dropout and other problems.

For example, in order to improve disaster tolerance capability of a system, mutual data backup is required to perform between multiple network elements. When one of the network elements fails, backup data of other network elements can be enabled immediately. Such a data backup scheme requires frequent data exchange between multiple network elements, so that there would be a data volume up to several hundreds of megabits, and complicated data validate and conversion are also required to be performed. An existing data transmission mode not only easily makes a message channel be congested to affect stability of the system, but also falls short of data error correction capability, and disastrous consequences may occur due to incomplete data if a network failure occurs when only half of the data have been transmitted.

Further relevant technologies are also known from US6430188B1 (KADAMBI SHIRI [US] ET AL) 6 August 2002 (2002-08-06) which relates to unified table for L2, L3, L4, switching and filtering, and US2013/339825A1 (FREKING RONALD E [US] ET AL) 19 December 2013 (2013-12-19) which relates to external settings that reconfigure the error handling behavior of a distributed PCIE. Accordingly, there is a need for a reliable data acquisition scheme, to achieve high-performance data transmission under a premise of ensuring system stability and data security.

### SUMMARY

Aiming at a problem that data transmission makes a message channel congested to affect stability of a system in the related art, the present disclosure provides a data acquisition method, device and system, to at least address the above problem. The above problem is solved by a data acquisition method according to claim 1, and a data acquisition device according to claim 8.

According to one embodiment of the present invention, also provided is a data acquisition method, including: receiving, by a second network management server corresponding to a second network element, a first message transmitted by a first network management server corresponding to a first network element, where the first message carries a first event number; searching a pre-configured message distribution table by the second network management server, to acquire a first message processing method corresponding to the first event number, where the message distribution table is configured to record various processes of data transmission and message processing methods required to be executed in the various processes, as well as a message receiver in a next process and an event number required to be processed by the message receiver; and, the first message processing method customizes a transmission method of acquiring data from other network elements by the second network management server; and executing the first message processing method by the second network management server, to request and acquire data from network management servers of the other network elements.

Optionally, after requesting and acquiring data from the other network elements, the method further includes: processing, by the second network management server, the requested data, and performing an in-stockroom operation to the processed data.

Optionally, after acquiring data from the other network elements by the second network management server, the method further includes: judging, by the second network management server, whether the message distribution table has a next process, and acquiring, by the second network management server, a receiving network element identification of a second message in the next process and a second event number of a second message processing method required to be performed from the message distribution table if the message distribution table has the next process; and transmitting the second message to a network management server corresponding to the receiving network element identification by the second network management server, where the second message carries the second event number.

Optionally, the method further includes: receiving a third message carrying a third event number by the second network management server; searching, by the second network management server, the message distribution table to acquire a third message processing method corresponding to the third event number, where the third message processing method includes a method of synchronizing data requested by the second network management server to the second network element; and executing the third message processing method by the second network management server to synchronize the requested data to the second network element.

Optionally, if an exception occurs during executing of the first message processing method by the second network management server, the method includes: inquiring, by the second network management server, a pre-configured correspondence relationship between exception codes and event numbers to acquire a fourth event number corresponding to an exception code of an exception of this time; and transmitting a message carrying the fourth event number by the second network management server.

Optionally, the method further includes: receiving an operational instruction for configuring the message distribution table; configuring the message distribution table according to various input parameters, where a message processing method in the message distribution table conforms to a preset message processing specification; and loading the completely configured message distribution table.

Optionally, the method further includes: receiving an operational instruction for modifying the message distribution table; modifying a corresponding entry in the message distribution table according to input parameters, where a message processing method in the modified message distribution table conforms to a preset message processing specification; and loading the modified message distribution table.

According to another embodiment of the present invention, also provided is a data acquisition device, which is located at a second network management server corresponding to a second network element, including: a first receiving module, which is configured to receive a first message transmitted by a first network management server corresponding to a first network element, where the first message carries a first event number; a first acquisition module, which is configured to search a pre-configured message distribution table to acquire a first message processing method corresponding to the first event number, where the message distribution table is configured to record various processes of data transmission and message processing methods required to be executed in the various processes, as well as a message receiver in a next process and an event number required to be processed by the message receiver; and, the first message processing method customizes a transmission method of acquiring data from other network elements by the second network management server; and an execution module, which is configured to execute the first message processing method to request and acquire data from network management servers of the other network elements.

Optionally, the device further includes a judging module, which is configured to judge whether the message distribution table has a next process, and trigger a second acquisition module if the message distribution table has the next process; the second acquisition module, which is configured to acquire a receiving network element identification of a second message in the next process and a second event number of a second message processing method required to be performed from the message distribution table; a transmission module, which is configured to transmit the second message to a network management server corresponding to the receiving network element identification, where the second message carries the second event number.

Optionally, the first receiving module is further configured to receive a third message carrying a third event number; the first acquisition module is further configured to search the message distribution table to acquire a third message processing method corresponding to the third event number, where the third message processing method includes a method of synchronizing data requested by the second network management server to the second network element; and the device further includes a synchronization module, which is configured to execute the third message processing method to synchronize the requested data to the second network element.

Optionally, the device further includes an exception handling module, which is configured to inquire, when an exception occurs during executing of the first message processing method, a pre-configured correspondence relationship between exception codes and event numbers to acquire a fourth event number corresponding to an exception code of an exception of this time; and transmit a message carrying the fourth event number.

Optionally, the device further includes a second receiving module, which is configured to receive an operational instruction for configuring the message distribution table; a configuration module, which is configured to configure the message distribution table according to various input parameters, where a message processing method in the message distribution table conforms to a preset message processing specification; and a loading module, which is configured to load the completely configured message distribution table.

Optionally, the second receiving module is further configured to receive an operational instruction for modifying the message distribution table; modify a corresponding entry in the message distribution table according to input parameters, where a message processing method in the modified message distribution table conforms to a preset message processing specification; and the loading module is further configured to load the modified message distribution table.

According to yet another embodiment of the present invention, provided is a data acquisition system, including a network element and a network management server corresponding to the network element, where the network management server includes the above device, and is configured to synchronize the data requested from other network elements to the network element; and the network element is configured to receive data transmitted by the network management server.

By means of the present disclosure, a message is transmitted between network management servers, a method of transmitting data is indicated by an event number, a receiver acquires the data by executing a message processing method indicated by the event number, and separates a message channel from a data channel, and a user may customize a specific method of processing a message, namely, data transmission between the network management servers (that is, background communication drive networks). Accordingly, the data transmission would not make the message channel congested and improves system stability; moreover, since data are transmitted through the network management servers, the problem of incomplete data due to incomplete transmission when a network failure occurs is avoided.

### BRIEF DESCRIPTION OF DRAWINGS

Accompanying drawings described here are intended to provide a further understanding of the present disclosure and form a part of this application. Schematic embodiments and their descriptions of the present invention are illustrative of the present disclosure and are not intended to be improper limiting of the present disclosure. In the accompanying drawings:
FIG. 1 is a flow diagram illustrating a data acquisition method according to embodiments of the present invention;
FIG. 2 is a schematic structural diagram illustrating a data acquisition device according to embodiments of the present invention;
FIG. 3 is a schematic structural diagram illustrating a data acquisition device according to an optional embodiment of the present invention;
FIG. 4 is a schematic structural diagram illustrating a data acquisition system according to embodiments of the present invention;
FIG. 5 is a schematic structural diagram illustrating a system according to an optional embodiment of the present invention;
FIG. 6 is a schematic structural diagram illustrating a data transmission module according to embodiments of the present invention;
FIG. 7 is a schematic diagram illustrating a message distribution table according to an optional embodiment of the present invention;
FIG. 8 is a schematic diagram illustrating an exception distribution table according to an optional embodiment of the present invention; and
FIG. 9 is an in-system flow diagram illustrating data backup according to an optional embodiment of the present invention.

### DETAILED DESCRIPTION

Hereinafter, the present disclosure will be described in detail with reference to the accompanying drawings and in combination with embodiments. It is to be noted that, in the case of no conflict, the features of embodiments and embodiments of the present application may be combined with each other.

With respect to the above problem in data transmission in the related art, embodiments of the present invention provide a communication solution between a plurality of network elements. In embodiments of the present invention, a dual-channel transmission mode separating messages and data is adopted to drive data transmission by messages. A user can customize a data transmission mode, and moreover, the technical solution provided by embodiments of the present invention supports dynamic loading, and supports different network element types and a large data volume of information transmission.

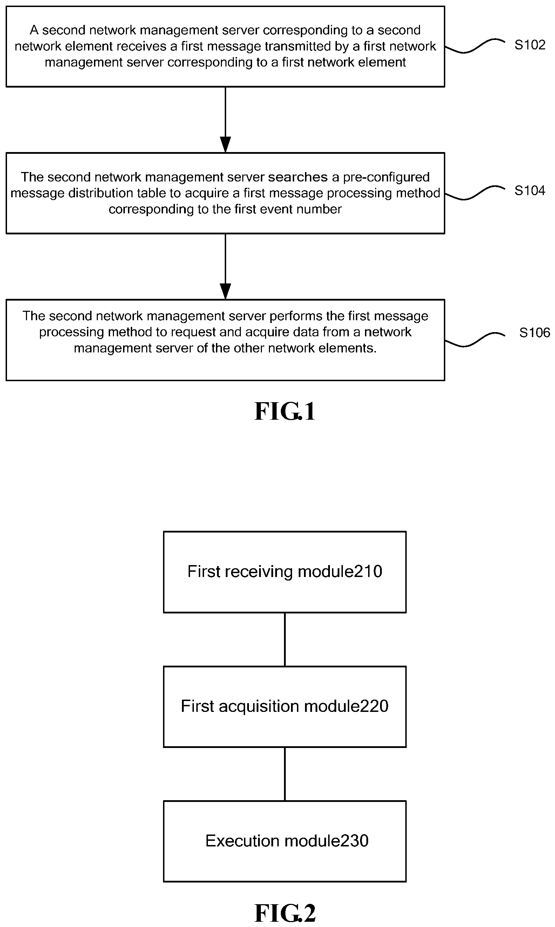

FIG. 1 is a flow diagram illustrating a data acquisition method according to embodiments of the present invention. As shown in FIG. 1, the method mainly includes following steps.

In step S102, a second network management server corresponding to a second network element receives a first message transmitted by a first network management server corresponding to a first network element, where the first message carries a first event number.

In a specific implementation process of embodiments of the present invention, a communication process can be initiated by a network management client or initiated by a network management server at a set time after a user sets a timed task. After the communication is initiated, a processing method corresponding to an event number of an initiator (for example, the first network management server corresponding to the first network element in step S102) is executed firstly; and, after the processing is completed, a message is transmitted to a network management server (for example, the second network server in step S102) of a network element corresponding to a next event number according to a sequence configured in a message distribution table for subsequent processing.

In step S104, the second network management server searches a pre-configured message distribution table to acquire a first message processing method corresponding to the first event number, where the first message processing method customizes a transmission method of acquiring data from other network elements by the second network management server.

In one optional implementation of embodiments of the present invention, the message distribution table may be a two-dimensional mapping table, including four pieces of key information of: event number, message processing method, receiving network element number and transmitting event number. Table 1 is an example of the message distribution table.

**Table 1**

| Event Number | Message Processing Method | Receiving Network Element | Transmitting Event Number |
|---|---|---|---|
| 1 | Begin | 13 | 2 |
| 2 | Event 1 | 11 | 100 |
| 100 | Event 2 | 13 | 101 |
| 101 | End | 11 | 200 |
| 200 | End | 0 | 0 |

The message distribution table can be stored in the network management server in forms of a file, a database and the like.

In step S106, the second network management server performs the first message processing method to request and acquire data from the other network elements.

In one optional implementation solution of embodiments of the present invention, after requesting and acquiring data from the other network elements, the second network management server can process the requested data, and then perform an in-stockroom operation on processed data.

In one optional implementation solution, after requesting and acquiring data from the other network elements, the second network management server can set a process in the message distribution table to indicate the second network management server to synchronize the requested data to the second network element; accordingly, the method may further include: the second network management server receives a third message carrying a third event number; the second network management server searches the message distribution table to acquire a third message processing method corresponding to the third event number, where the third message processing method includes a method of synchronizing the data requested by the second network management server to the second network element; and the second network management server executes the third message processing method to synchronize the requested data to the second network element. By means of the optional implementation, a problem that data in the second network element is unavailable due to transmission interruption when data directly transmitted to the network element is incompletely transmitted is avoided.

In one optional implementation of embodiments of the present invention, after the second network management server acquires data from the other network elements, the second network management server can determine whether there is a next process in the message distribution table, and, if there is a next process in the message distribution table, acquire a receiving network element identification of a second message in the next process and a second event number of a second message processing method required to be performed from the message distribution table; and, the second network management server transmits the second message to a network management server corresponding to the receiving network element identification, where the second message carries the second event number.

In one optional implementation, an exceptional condition can be handled. If an exception occurs during performing of the first message processing method by the second network management server, the second network management server inquires a pre-configured correspondence relationship between exception codes and event numbers (i.e. the exception distribution table), so as to acquire a fourth event number corresponding to an exception code of an exception of this time; and transmits a message carrying the fourth event number to perform an exception handling flow. In this optional implementation, an exception handling method can be configured in the network management server, that is, a correspondence relationship between the exception code and the event number of the corresponding message processing method for processing the exception code is configured. When an exception occurs, the event number corresponding to the exception code is acquired, then a message is transmitted, the network management server received this message acquires an entry corresponding to the event number from the message distribution table, and performs handling in accordance with the entry corresponding to the fourth event number in the message distribution table.

In one optional implementation of embodiments of the present invention, a user can configure the message distribution table, and the network management server receives an operational instruction for configuring the message distribution table; then configures the message distribution table according to various input parameters, where a message processing method in the message distribution table conforms to a preset message processing specification (can be defined through a specific interface (for example, a message processing interface)); and then loads the completely configured message distribution table.

In addition, in another optional implementation of embodiments of the present invention, a user can also modify a completely configured message distribution table. In this optional implementation, a network management server receives an operational instruction for modifying the message distribution table; modifies a corresponding entry in the message distribution table according to input parameters, where a message processing method in the modified message distribution table conforms to a preset message processing specification; and finally loads the modified message distribution table. By means of this optional implementation, the message distribution table can be dynamically configured, that is, a data transmission process is dynamically configured.

According to embodiments of the present invention, a data acquisition device is further provided. This device is located at the second network management server corresponding to the second network element, and is configured to implement the above data acquisition method.

FIG. 2 is a schematic structural diagram illustrating a data acquisition device according to embodiments of the present invention. As shown in FIG. 2, the device mainly includes a first receiving module 210, which is configured to receive a first message transmitted by a first network management server corresponding to a first network element, where the first message carries a first event number; a first acquisition module 220, which is configured to search a pre-configured message distribution table to acquire a first message processing method corresponding to the first event number, where the first message processing method customizes a transmission method of acquiring data from other network elements by the second network management server; and an execution module 230, which is configured to execute the first message processing method to request and acquire data from network management servers of the other network elements.

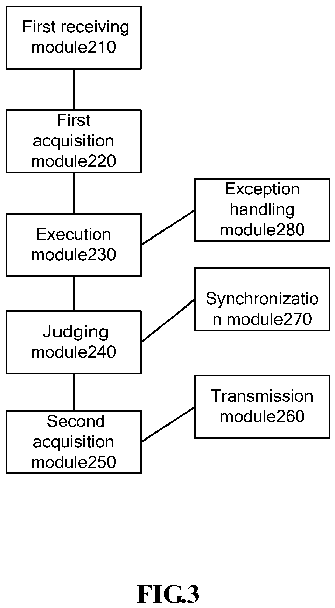

Optionally, as shown in FIG. 3, the device may further include a judging module 240, which is configured to determine whether there is a next process in the message distribution table, and, if there is a next process in the message distribution table, trigger a second acquisition module 250; the second acquisition module 250, which is configured to acquire a receiving network element identification of a second message in the next process and a second event number of a second message processing method required to be performed from the message distribution table; and a transmission module 260, which is configured to transmit the second message to the network management server corresponding to the receiving network element identification, where the second message carries the second event number. Optionally, the first receiving module 210 is further configured to receive a third message carrying a third event number; the first acquisition module 220 is further configured to search the message distribution table to acquire a third message processing method corresponding to the third event number, where the third message processing method includes a method of synchronizing the data requested by the second network management server to the second network element; and then as shown in FIG. 3, the device may further include a synchronization module 270, which is configured to perform the third message processing method to synchronize the requested data to the second network element.

Optionally, as shown in FIG. 3, the device may further include an exception handling module 280, which is configured to inquire, when an exception occurs during performing of the first message processing method, a pre-configured correspondence relationship between exception codes and event numbers, so as to acquire a fourth event number corresponding to an exception code of an exception of this time; and transmit a message carrying the fourth event number to enter an exception handling flow.

Optionally, the device may further include a second receiving module, which is configured to receive an operational instruction for configuring the message distribution table; a configuration module, which is configured to configure the message distribution table according to various input parameters, where a message processing method in the message distribution table conforms to a preset message processing specification; and a loading module, which is configured to load the completely configured message distribution table.

Optionally, the second receiving module is further configured to receive an operational instruction for modifying the message distribution table; the configuration module is further configured to modify a corresponding entry in the message distribution table according to input parameters, where a message processing method in the modified message distribution table conforms to a preset message processing specification; and the loading module is further configured to load the modified message distribution table.

According to embodiments of the present invention, a data acquisition system is further provided.

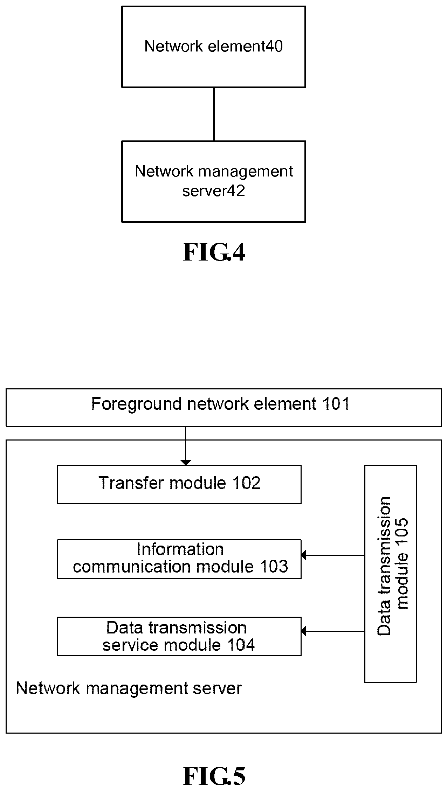

FIG. 4 is a schematic structural diagram illustrating a data acquisition system according to embodiments of the present invention. As shown in FIG. 4, the system mainly includes a network element 40 and a network management server 42 corresponding to the network element, where the network management server 42 may include the above data acquisition device, and is configured to synchronize requested data to the network element 40; and the network element 40 is configured to receive data transmitted by the network management server 42.

In a specific implementation process, a new module (that is, the above device) can be added in the network management server. In one optional implementation solution of embodiments of the present invention, this module is referred to as a data transmission module, and the data transmission module may be of other functional structure implementations except for the above functional structure form.

For example, in the system as shown in FIG. 5, a data transmission module 105 is added in the network management server. In the system as shown in FIG. 5, the network management server includes a message communication module 103, a transfer module 102 between the network management server and network elements, and a data transmission service (such as sftp, http and the like) module 104 at bottom layer of the system.

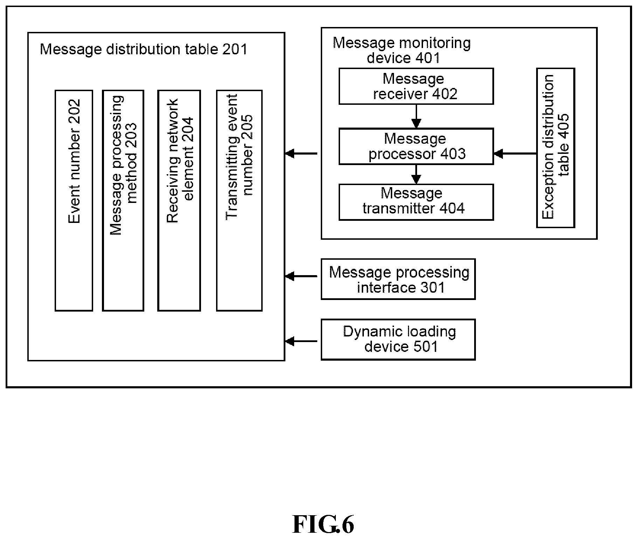

In FIG. 5, a foreground network element 101 (that is, the above network element) is a network element unit undertaking a certain business function, and is a core of a communication system. The transfer module 102 is responsible for transferring data of the network management server to the foreground network element 102, and is a unique channel between a foreground and a background. The message communication module 103 is a module which is provided by an existing network management system and is configured to communicate a message, and messages are transmitted through this module in embodiments of the present invention. The data transmission service module 104 is a file-based transmission channel which is provided by a bottom system and is further packaged by the network management server, and data are transmitted through this module in embodiments of the present invention. The data transmission module 105 is a core module added to embodiments of the present invention, and a structure of the data transmission module 105 is as shown in FIG. 6.

FIG. 6 is a schematic structural diagram illustrating a data transmission module according to embodiments of the present invention. As shown in FIG. 6, the data transmission module mainly includes a message distribution table 201, a message processing interface 301, a message monitoring device 401 and a dynamic loading device 501.

The message distribution table 201 can be a two-dimensional mapping table, including four sub-components of an event number 202, a message processing method 203, a receiving network element 204 and a transmitting event number 205, that is, the message distribution table 201 records a correspondence relationship between the event number 202, the message processing method 203, the receiving network element 204 and the transmitting event number 205. The event number is a main key of message distribution, and is required to be unique without a sequential requirement; the message processing method is a user-defined processing method for received messages by the present network element, and has to conform to a specification requirement of a message processing interface; the receiving network element refers to a number of target network element to which a message is to be transmitted after this message is completely processed, and is defined as a positive integer according to an actual condition; the transmitting event number is a number of an event to be processed by a target network element, and this field indicates that a message flow ends if being configured as an end flag (generally represented by 0 or other appointed numerical values). The message distribution table 201 can be stored in forms of a file, a database and the like.

The message processing interface 301 is configured to define a general message processing specification. This interface is generally implemented by a receiver network element of a message, so as to customize an own message processing method. This interface only defines a specification so as to be correctly monitored by the message monitoring device 401, and each message processing method configured in the message distribution table 201 is a specific implementation of this interface.

The message monitoring device 401 is responsible for receiving, processing and transmitting this network element message. The message monitoring device 401 may include a message receiver 402 which is configured to monitor and receive a message transmitted to this network element (that is, a network management server corresponding to the network element); a message processor 403 which is configured to process a message according to a message processing method configured in the message distribution table 201 and perform exception handling according to an exception distribution table; a message transmitter 404 which is configured to transmit a message to a next network element according to configuration of the message distribution table after the message is completely processed; and an exception distribution table 405, which is configured to configure a processing mode when encountering a specific exception, where the exception distribution table includes two key fields of exception code and transmitting event number.

In this embodiment, the message monitoring module 401 is responsible for monitoring a message transmitted to a network management server corresponding to this network element by a network management server corresponding to other network elements. When it is monitored that there is a coming message, a message receiver in this device is responsible for receiving the message and searching a message processing method corresponding to an event number in the message distribution table, and then a message processor executes this method and performs exception handling. After the execution is completed, the message transmitter transmits the message to a next network element according to data configured in the message distribution table.

In embodiments of the present invention, the exception distribution table 405 has a function of determining a transmission direction of messages if a certain exception occurs during processing of the message processor. That is, in a case that the exception occurs, transmitting event numbers configured by the message distribution table 201 malfunction, and are replaced by event numbers configured in the exception distribution table 405. Table 2 is an example of the exception distribution table.

**Table 2**

| Exception Code | Transmitting Event Number |
|---|---|
| 120001 | 4001 |
| 120006 | 4002 |

In a specific implementation process, a specific meaning corresponding to the exception code is internally defined by a system. The exception distribution table as shown in Table 2 indicates that if an exception condition with a designation of 120001 is transmitted in a handling process, it is turned to an event number 4001 for processing; and if an exception condition with a designation of 120006 is transmitted in a handling process, it is turned to an event number 4002 for processing, where the 4001 and 4002 here have to be configured and implemented in the message distribution table.

The dynamic loading device 501 is configured to load a message distribution table. After the user configures or modifies the message distribution table, the dynamic loading device 501 is executed so that the message distribution table can take effect immediately. In this embodiment, the dynamic loading device 501 is configured to accomplish parsing and loading of the message distribution table. After the user realizes or modifies content of the message distribution table, the dynamic loading device 501 is executed firstly so that the content of the message distribution table can take effect without affecting normal operation of the server and network element. By means of the dynamic loading device, flexibility and application scope of data transmission are improved, for example, monitoring for specific network elements and collection for specific information and the like can be realized without knowledge of the user.

In embodiments of the present invention, a communication process can be initiated by a network management client or initiated by a network management server at a set time after a user sets a timed task. After the communication is initiated, the message monitoring device 401 firstly executes a processing method corresponding to an event number of an initiator; and after the processing is completed, a message is transmitted to a network element corresponding to a next event number according to a sequence configured in a message distribution table for subsequent processing.

If a certain network element needs to request data from other network elements, it can be implemented in a message processing method. Data prepared by other network elements are downloaded in a customized way. After processing the requested data, the network management server performs an in-stockroom operation and the like on the processed data; at this moment, if there is a next process in the message distribution table, the message is then transmitted to a next network element for subsequent processing. If there is no next process, this communication then ends, and the transfer module 102 synchronizes changed data after communication to corresponding network elements.

By taking the message distribution table shown in Table 1 as an example, a network management server corresponding to a network element 11 initiates a session firstly (it is not reflected in the message distribution table which network element side firstly initiates, but triggered by a client or timed task and the like) to execute a [Begin] method, and then transmits an event number 2 to a network management server corresponding to a network element 13 through a message. After receiving the message, the network management server corresponding to the network element 13 executes a method [Event 1] corresponding to the event number 2, and transmits an event number 100 back to a network management server corresponding to the network element 11 after the execution is completed. After receiving the message, the network management server corresponding to the network element 11 executes an [Event 2], and then transmits 101 to a network management server corresponding to the network element 13 after the execution is completed. The network management server corresponding to the network element 13 receives the message, executes an [End] method, and transmits a message with an event number 200 to the network management server corresponding to the network element 11, where the event number 200 also corresponds to the [End] method; the network management server corresponding to the network element 11 executes the [End] method, and at this point, a receiving network element and a transmitting event number are both 0, which indicates that the process is ended.

As can be seen from the above example, a message channel and a data channel are separated in a data transfer process. Each message only contains two integer values of the receiving network element number and the transmitting event number, and a message body is very small, so that transmission reliability and safety are ensured.

In the above example, how data are transmitted cannot be directly seen. The data transmission is implemented in the message processing method, such as [Event 1] or [Event 2]. The user can customize any transmission mode by relying on a mature solution at bottom of a system, for example, an encrypted sftp service can be utilized, and however, the user can use a self-defined way to compress or encrypt a data format itself, which is very flexible in application.

Moreover, in embodiments of the present invention, all intermediate processes of data transmission are performed on a background network management server without knowledge of network elements. Only when data are changed after the data transmission is completed, a data transfer function (i.e., the above-described transfer module) of a network manager notifies the network element to update status. If any network fault or the like occurs in a transmission process, this session may be safely ended without affecting working status of the network element.

Through the above technical solution provided by embodiments of the present invention, the message channel and the data channel are separated, and the user can customize a specific message processing method in accordance with a specification of the message processing interface, so as to drive data transmission among networks by background communication. Therefore, the present disclosure has advantages of being safe and hidden, being flexible in use, supporting a large volume of data transmission and the like.

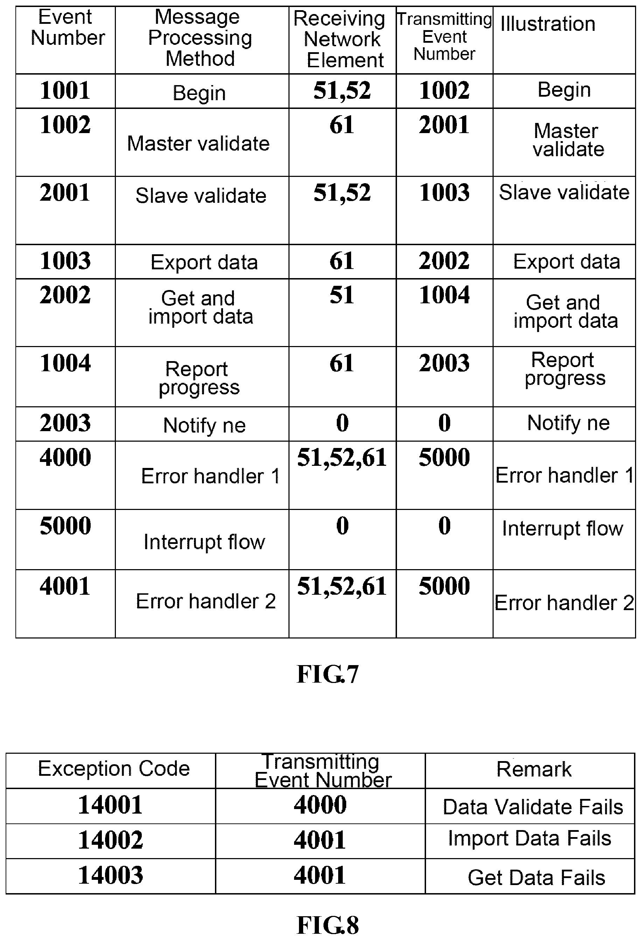

The technical solution provided by embodiments of the present invention will be further described below by way of an example of realizing dual-homing disaster recovery backup by the message distribution table shown in FIG. 7 and an exception distribution table shown in FIG. 8. Reference numbers 51 and 52 refer to master network elements, reference number 61 refers to a slave network element, reference number 51 refers to an initiator of a message, and data of network elements 51 and 52 need to be backed up to the network element 61.

During implementation, the message distribution table and the exception distribution table are configured in corresponding network management servers of each network element in accordance with FIG. 7 and FIG. 8, and the message processing method configured in the message distribution table is realized, and then the dynamic loading is carried out.

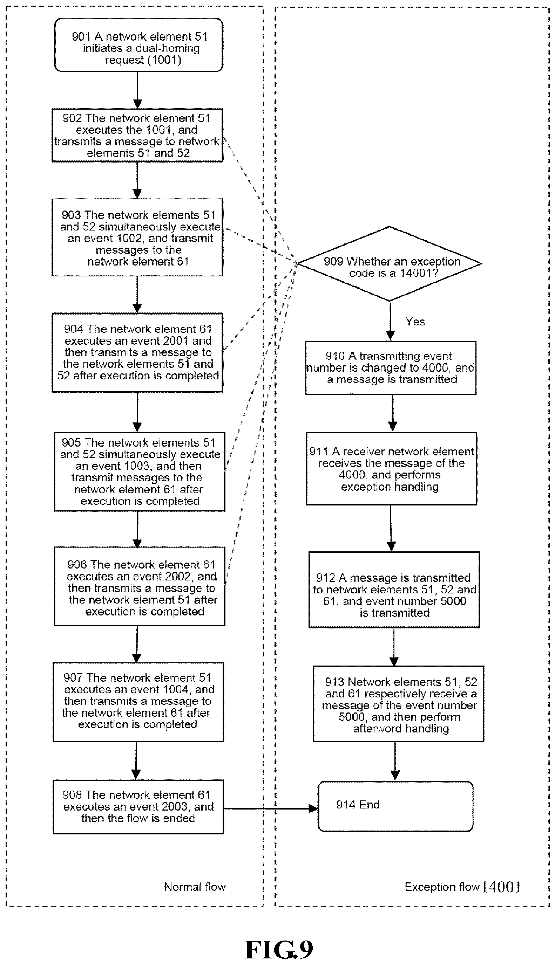

FIG. 9 is an in-system flow diagram illustrating data backup performed in this embodiment. A dashed-line box on the left shows a normal flow, and a dashed-line box on the right shows an exceptional flow, which merely shows a handling flow of the exception code 14001, and other exception handling flows are similar. Multiple steps in the normal flow may be exceptional and then go to the exceptional flow, which is marked with a dotted line in FIG. 9.

As shown in FIG. 9, backing up data of the network elements 51 and 52 to the network element 61 mainly includes following steps.

In step 901, a network management server corresponding to a network element 51 initiates a dual-homing request and allocates an event number as 1001.

In step 902, a message monitoring device of the network management server corresponding to the network element 51 receives a message with an event number of 1001, and executes a message processing method (Begin) corresponding to this event number, and transmits a message to network management servers corresponding to network elements 51 and 52 after execution is completed, with an event number of 1002.

It is noted that transmitting a message within this network management server is also supported in this embodiment.

In step 903, the network management servers corresponding to the network elements 51 and 52 simultaneously receive the message, and execute an event 1002 (performing data validating at a master end, and automatically turning to an exception flow if the validating does not pass; similarly hereinafter), and then transmit messages to a network management server corresponding to a network element 61.

In step 904, the network management server corresponding to the network element 61 executes an event 2001 (executing data validating at a slave end), and then transmits a message to the network management servers corresponding to the network elements 51 and 52 after execution is completed.

In step 905, the network management servers corresponding to the network elements 51 and 52 simultaneously execute an event 1003 (a master end performs data export), and then transmits a message to a network management server corresponding to a network element 61 after execution is completed.

In step 906, the network management server corresponding to the network element 61 executes an event 2002 (acquiring data from master network elements 51 and 52, and importing after processing), and then transmits a message to the network management server corresponding to a network element 51 after execution is completed. It is noted that since the network management server corresponding to a network element 51 is an initiator, an executing condition is to be informed to the initiator without informing the network management server corresponding to the network element 52.

In step 907, the network management server corresponding to the network element 51 executes an event 1004 (reporting a progress, and informing a user that an opposing network element has successfully acquired data), and then transmits a message to the network management server corresponding to the network element 61 after execution is completed.

In step 908, the network management server corresponding to the network element 61 receives the message, and executes an event 2003 (transferring data, that is, informing a foreground network element of changed data. Since only data of the network element 61 changes in the flow, only the network management server corresponding to the network element 61 needs to transfer data), where a transmitting event number in the message distribution table is 0, indicating that the flow in ended.

In step 909, it is judged whether the exception code is 14001. If the exception code is 14001, the flow goes to an exception handling flow 910; otherwise, the flow goes to another exception handling flow (omitted). In the above step, if any step is exceptional, the process goes to this step.

In step 910, an event number 4000 corresponding to 14001 is found according to the exception distribution table, the transmitting event number of the message is changed to 4000, the transmitted network element is unchanged, and a message is transmitted.

In step 911, a receiving network element receives the message of the 4000, and performs exception handling (that is, executing the message processing method Error handler 1 corresponding to an event number 4000 in the message distribution table).

In step 912, the network element handling the exception transmits a message carrying an event number 5000 to all network elements (51, 52 and 61).

In step 913, all network elements receive the message with the event number 5000, deal with the afterward handling and end the flow.

In step 914, the process is ended.

From the above description, it can be seen that the message channel and the data channel are separated in the data transmission process in embodiments of the present invention. Each message only contains two integer values of the receiving network element number and the transmitting event number, and the message body is very small, so that transmission reliability and safety are ensured. Also, in embodiments of the present invention, the user can customize any transmission mode by relying on a mature solution at bottom of a system, for example, an encrypted sftp service can be utilized, and however, the user can use a self-defined way to compress or encrypt a data format itself, which is very flexible in application. In addition, in embodiments of the present invention, all intermediate processes of data transmission are performed on a background network management server without knowledge of network elements. Only when data are changed after the data transmission is completed, a data transfer function (i.e., the above-described transfer module) of a network manager notifies the network element to update status. If any network fault or the like occurs in a transmission process, this session may be safely ended without affecting working status of the network element.

It will be apparent to those skilled in the art that the various modules or steps of the present disclosure described above may be implemented by using general purpose computing devices that may be centralized on a single computing device or distributed over a network consisting of a plurality of computing devices, Optionally, they may be implemented with a program code executable by the computing device so that they may be stored in a storage device for being executed by the computing device, and in some cases, the shown or described steps may be performed in a sequence different from a sequence described here, or they may be separately made into individual integrated circuit modules, or a plurality of modules or steps among them are made into a single integrated circuit module. In this way, the present disclosure is not limited to any particular combination of hardware and software.

### INDUSTRIAL APPLICABILITY

According to the above technical solution provided by embodiments of the present invention, a message is transmitted between network management servers, a method of transmitting data is indicated by an event number, a receiver acquires the data by executing a message processing method indicated by the event number, and separates a message channel from a data channel, and a user may customize a specific method of processing a message, namely, data transmission between the network management servers (that is, background communication drive networks). Accordingly, the data transmission may not make the message channel be congested and improves system stability; moreover, since data are transmitted through the network management server, the problem of incomplete data when a network failure occurs because data are incompletely transmitted is avoided.

## Claims

1. A data acquisition method, applied for multiple network elements for mutual data backup, comprising:
receiving (S102), by a second network management server corresponding to a second network element, a first message transmitted by a first network management server corresponding to a first network element, wherein the first message carries a first event number;
searching (S104), by the second network management server, a pre-configured message distribution table to acquire a first message processing method corresponding to the first event number, wherein the first message processing method customizes a transmission method of acquiring data from the first network element or other network elements by the second network management server; and
executing (S106), by the second network management server, the first message processing method to request and acquire data from the first network management server corresponding to the first network element or network management servers of the other network elements, and synchronizing the data to the second network element;
wherein the message distribution table comprises event numbers (202) for various processes of data transmission and message processing methods (203) required to be executed in the corresponding processes, as well as at least one receiving network element (204) representing a message receiver in a next process and at least one transmitting event number (205) required to be processed by the message receiver.

2. The method according to claim 1, after requesting and acquiring data from the first network management server corresponding to the first network element or the other network elements, further comprising: processing, by the second network management server, the requested data, and performing an in-stockroom operation to the processed data.

3. The method according to claim 1, after acquiring data from the first network element or the other network elements by the second network management server, further comprising:
judging, by the second network management server, whether the message distribution table has a next process, and acquiring from the message distribution table, by the second network management server, an identification of a receiving network element of a second message and a second event number of a second message processing method required to be performed in the next process if the message distribution table has the next process; and
transmitting, by the second network management server, the second message to a network management server corresponding to the identification of the receiving network element, wherein the second message carries the second event number.

4. The method according to claim 1, further comprising:
receiving, by the second network management server, a third message carrying a third event number;
searching, by the second network management server, the message distribution table to acquire a third message processing method corresponding to the third event number, wherein the third message processing method comprises a method of synchronizing data requested by the second network management server to the second network element; and
executing, by the second network management server, the third message processing method to synchronize the requested data to the second network element.

5. The method according to any one of claims 1 to 4, wherein if an exception occurs during executing of the first message processing method by the second network management server, the method further comprises:
inquiring, by the second network management server, a pre-configured correspondence relationship between exception codes and event numbers to acquire a fourth event number corresponding to an exception code of the exception of this time;
and
transmitting, by the second network management server, a message carrying the fourth event number.

6. The method according to any one of claims 1 to 4, further comprising:
receiving an operational instruction for configuring the message distribution table;
configuring the message distribution table according to various input parameters, wherein message processing methods in the message distribution table conform to a preset message processing specification; and
loading the completely configured message distribution table.

7. The method according to claim 6, further comprising:
receiving an operational instruction for modifying the message distribution table;
modifying a corresponding entry in the message distribution table according to input parameters, wherein message processing methods in the modified message distribution table conform to a preset message processing specification; and
loading the modified message distribution table.

8. A data acquisition device, which is applied for multiple network elements for mutual data backup and located at a second network management server corresponding to a second network element, comprising:
a first receiving module (210), which is configured to receive a first message transmitted by a first network management server corresponding to a first network element, wherein the first message carries a first event number;
a first acquisition module (220), which is configured to search a pre-configured message distribution table to acquire a first message processing method corresponding to the first event number, wherein the first message processing method customizes a transmission method of acquiring data from the first network element or other network elements by the second network management server; and
an execution module (230), which is configured to execute the first message processing method to request and acquire data from the first network management server corresponding to the first network element or network management servers of the other network elements, and synchronizing the data to the second network element;
wherein the message distribution table comprises event numbers (202) for various processes of data transmission and message processing methods (203) required to be executed in the corresponding processes, as well as at least one receiving network element (204) representing a message receiver in a next process and at least one transmitting event number (205) required to be processed by the message receiver.

9. The device according to claim 8, further comprising:
a judging module (240), which is configured to judge whether the message distribution table has a next process, and trigger a second acquisition module (250) if the message distribution table has the next process;
the second acquisition module (250), which is configured to acquire from the message distribution table an identification of a receiving network element of a second message and a second event number of a second message processing method required to be performed in the next process; and
a transmission module (260), which is configured to transmit the second message to the network management server corresponding to the identification of the receiving network element, wherein the second message carries the second event number.

10. The device according to claim 8, wherein
the first receiving module (210) is further configured to receive a third message carrying a third event number;
the first acquisition module (220) is further configured to search the message distribution table to acquire a third message processing method corresponding to the third event number, wherein the third message processing method comprises a method of synchronizing data requested by the second network management server to the second network element; and
the device further comprises a synchronization module (270), which is configured to execute the third message processing method to synchronize the requested data to the second network element.

11. The device according to any one of claims 8 to 10, further comprising:
an exception handling module (280), which is configured to inquire, when an exception occurs during executing of the first message processing method, a pre-configured correspondence relationship between exception codes and event numbers to acquire a fourth event number corresponding to an exception code of the exception of this time, and transmit a message carrying the fourth event number.

12. The device according to any one of claims 8 to 10, further comprising:
a second receiving module, which is configured to receive an operational instruction for configuring the message distribution table;
a configuration module, which is configured to configure the message distribution table according to various input parameters, wherein message processing methods in the message distribution table conforms to a preset message processing specification;
and
a loading module, which is configured to load the completely configured message distribution table.

13. The device according to claim 12, wherein
the second receiving module is further configured to receive an operational instruction for modifying the message distribution table;
the configuration module is further configured to modify a corresponding entry in the message distribution table according to input parameters, wherein message processing methods in the modified message distribution table conforms to a preset message processing specification; and
the loading module is further configured to load the modified message distribution table.

14. A data acquisition system, comprising a network element and a network management server corresponding to the network element, wherein
the network management server comprises the device according to any one of claims 8 to 13, and is configured to synchronize data requested from other network elements to the network element; and
the network element is configured to receive data transmitted by the network management server.

## Patentansprüche

1. Datenerfassungsverfahren, das für mehrere Netzwerkelemente zur gegenseitigen Datensicherung angewendet wird, das Folgendes umfasst:
Empfangen (S102), durch einen zweiten Netzwerkmanagementserver, der einem zweiten Netzwerkelement entspricht, einer ersten Nachricht, die von einem ersten Netzwerkmanagementserver, der einem ersten Netzwerkelement entspricht, gesendet wird, wobei die erste Nachricht eine erste Ereignisnummer trägt;
Durchsuchen (S104) einer vorkonfigurierten Nachrichtenverteilungstabelle durch den zweiten Netzwerkmanagementserver, um ein erstes Nachrichtenverarbeitungsverfahren zu erfassen, das der ersten Ereignisnummer entspricht, wobei das erste Nachrichtenverarbeitungsverfahren ein Übertragungsverfahren zum Erfassen von Daten von dem ersten Netzwerkelement oder anderen Netzwerkelementen durch den zweiten Netzwerkmanagementserver individuell anpasst; und
Ausführen (S106) des ersten Nachrichtenverarbeitungsverfahrens durch den zweiten Netzwerkmanagementserver, um Daten von dem ersten Netzwerkmanagementserver, der dem ersten Netzwerkelement entspricht, oder Netzwerkmanagementservern der anderen Netzwerkelemente anzufordern und zu erfassen, und Synchronisieren der Daten mit dem zweiten Netzwerkelement;
wobei die Nachrichtenverteilungstabelle Ereignisnummern (202) für verschiedene Prozesse von Datenübertragungs- und Nachrichtenverarbeitungsverfahren (203), die in den entsprechenden Prozessen auszuführen sind, sowie wenigstens ein Empfangsnetzwerkelement (204), das in einem nächsten Prozess einen Nachrichtenempfänger darstellt, und wenigstens eine Sendeereignisnummer (205) umfasst, die von dem Nachrichtenempfänger zu verarbeiten ist.

2. Verfahren nach Anspruch 1, das nach dem Anfordern und Erfassen von Daten von dem ersten Netzwerkmanagementserver, der dem ersten Netzwerkelement entspricht, oder den anderen Netzwerkelementen ferner Folgendes umfasst: Verarbeiten der angeforderten Daten durch den zweiten Netzwerkmanagementserver und Durchführen einer Einlagerungsoperation an den verarbeiteten Daten.

3. Verfahren nach Anspruch 1, das nach dem Erfassen von Daten von dem ersten Netzwerkelement oder den anderen Netzwerkelementen durch den zweiten Netzwerkmanagementserver ferner Folgendes umfasst:
Beurteilen, durch den zweiten Netzwerkmanagementserver, ob die Nachrichtenverteilungstabelle einen nächsten Prozess aufweist, und Erfassen aus der Nachrichtenverteilungstabelle, durch den zweiten Netzwerkmanagementserver, einer Kennung eines Empfangsnetzwerkelements einer zweiten Nachricht und einer zweiten Ereignisnummer eines zweiten Nachrichtenverarbeitungsverfahrens, das im nächsten Prozess durchzuführen ist, wenn die Nachrichtenverteilungstabelle den nächsten Prozess aufweist; und
Senden der zweiten Nachricht durch den zweiten Netzwerkmanagementserver an einen Netzwerkmanagementserver, der der Kennung des Empfangsnetzwerkelements entspricht, wobei die zweite Nachricht die zweite Ereignisnummer trägt.

4. Verfahren nach Anspruch 1, das ferner Folgendes umfasst:
Empfangen einer dritten Nachricht, die eine dritte Ereignisnummer trägt, durch den zweiten Netzwerkmanagementserver;
Durchsuchen der Nachrichtenverteilungstabelle durch den zweiten Netzwerkmanagementserver, um ein drittes Nachrichtenverarbeitungsverfahren zu erfassen, das der dritten Ereignisnummer entspricht, wobei das dritte Nachrichtenverarbeitungsverfahren ein Verfahren zum Synchronisieren von durch den zweiten Netzwerkmanagementserver angeforderten Daten mit dem zweiten Netzwerkelement umfasst; und
Ausführen des dritten Nachrichtenverarbeitungsverfahrens durch den zweiten Netzwerkmanagementserver, um die angeforderten Daten mit dem zweiten Netzwerkelement zu synchronisieren.

5. Verfahren nach einem der Ansprüche 1 bis 4, wobei, wenn während des Ausführens des ersten Nachrichtenverarbeitungsverfahrens durch den zweiten Netzwerkmanagementserver eine Ausnahmebedingung auftritt, das Verfahren ferner Folgendes umfasst:
Abfragen einer vorkonfigurierten Korrespondenzbeziehung zwischen Ausnahmebedingungscodes und Ereignisnummern durch den zweiten Netzwerkmanagementserver, um eine vierte Ereignisnummer zu erfassen, die einem Ausnahmebedingungscode der Ausnahmebedingung dieser Zeit entspricht; und
Senden einer Nachricht, die die vierte Ereignisnummer trägt, durch den zweiten Netzwerkmanagementserver.

6. Verfahren nach einem der Ansprüche 1 bis 4, das ferner Folgendes umfasst:
Empfangen einer Operationsanweisung zum Konfigurieren der Nachrichtenverteilungstabelle;
Konfigurieren der Nachrichtenverteilungstabelle nach Maßgabe verschiedener Eingangsparameter, wobei Nachrichtenverarbeitungsverfahren in der Nachrichtenverteilungstabelle mit einer vorgegebenen Nachrichtenverarbeitungsspezifikation übereinstimmen; und
Laden der vollständig konfigurierten Nachrichtenverteilungstabelle.

7. Verfahren nach Anspruch 6, das ferner Folgendes umfasst:
Empfangen einer Operationsanweisung zum Modifizieren der Nachrichtenverteilungstabelle;
Modifizieren eines entsprechenden Eintrags in der Nachrichtenverteilungstabelle nach Maßgabe von Eingangsparametern, wobei Nachrichtenverarbeitungsverfahren in der modifizierten Nachrichtenverteilungstabelle mit einer vorgegebenen Nachrichtenverarbeitungsspezifikation übereinstimmen; und
Laden der modifizierten Nachrichtenverteilungstabelle.

8. Datenerfassungsvorrichtung, die für mehrere Netzwerkelemente zur gegenseitigen Datensicherung angewendet wird und sich auf einem zweiten Netzwerkmanagementserver befindet, der einem zweiten Netzwerkelement entspricht, und die Folgendes umfasst:
ein erstes Empfangsmodul (210), das dazu eingerichtet ist, eine erste Nachricht zu empfangen, die von einem ersten Netzwerkmanagementserver, der einem ersten Netzwerkelement entspricht, gesendet wird, wobei die erste Nachricht eine erste Ereignisnummer trägt;
ein erstes Erfassungsmodul (220), das dazu eingerichtet ist, eine vorkonfigurierte Nachrichtenverteilungstabelle zu durchsuchen, um ein erstes Nachrichtenverarbeitungsverfahren zu erfassen, das der ersten Ereignisnummer entspricht, wobei das erste Nachrichtenverarbeitungsverfahren ein Übertragungsverfahren zum Erfassen von Daten von dem ersten Netzwerkelement oder anderen Netzwerkelementen durch den zweiten Netzwerkmanagementserver individuell anpasst; und
ein Ausführungsmodul (230), das dazu eingerichtet ist, das erste Nachrichtenverarbeitungsverfahren auszuführen, um Daten von dem ersten Netzwerkmanagementserver, der dem ersten Netzwerkelement entspricht, oder Netzwerkmanagementservern der anderen Netzwerkelemente anzufordern und zu erfassen, und die Daten mit dem zweiten Netzwerkelement zu synchronisieren;
wobei die Nachrichtenverteilungstabelle Ereignisnummern (202) für verschiedene Prozesse von Datenübertragungs- und Nachrichtenverarbeitungsverfahren (203), die in den entsprechenden Prozessen auszuführen sind, sowie wenigstens ein Empfangsnetzwerkelement (204), das in einem nächsten Prozess einen Nachrichtenempfänger darstellt, und wenigstens eine Sendeereignisnummer (205) umfasst, die von dem Nachrichtenempfänger zu verarbeiten ist.

9. Vorrichtung nach Anspruch 8, die ferner Folgendes umfasst:
ein Beurteilungsmodul (240), das dazu eingerichtet ist, zu beurteilen, ob die Nachrichtenverteilungstabelle einen nächsten Prozess aufweist, und ein zweites Erfassungsmodul (250) zu aktivieren, wenn die Nachrichtenverteilungstabelle den nächsten Prozess aufweist;
das zweite Erfassungsmodul (250), das dazu eingerichtet ist, aus der Nachrichtenverteilungstabelle eine Kennung eines Empfangsnetzwerkelements einer zweiten Nachricht und eine zweite Ereignisnummer eines zweiten Nachrichtenverarbeitungsverfahrens, das im nächsten Prozess durchzuführen ist, zu erfassen, und
ein Sendemodul (260), das dazu eingerichtet ist, die zweite Nachricht an den Netzwerkmanagementserver, der der Kennung des Empfangsnetzwerkelements entspricht, zu senden, wobei die zweite Nachricht die zweite Ereignisnummer trägt.

10. Vorrichtung nach Anspruch 8, wobei
das erste Empfangsmodul (210) ferner dazu eingerichtet ist, eine dritte Nachricht zu empfangen, die eine dritte Ereignisnummer trägt;
das erste Erfassungsmodul (220) ferner dazu eingerichtet ist, die Nachrichtenverteilungstabelle zu durchsuchen, um ein drittes Nachrichtenverarbeitungsverfahren zu erfassen, das der dritten Ereignisnummer entspricht, wobei das dritte Nachrichtenverarbeitungsverfahren ein Verfahren zum Synchronisieren von durch den zweiten Netzwerkmanagementserver angeforderten Daten mit dem zweiten Netzwerkelement umfasst; und
die Vorrichtung ferner ein Synchronisierungsmodul (270) umfasst, das dazu eingerichtet ist, das dritte Nachrichtenverarbeitungsverfahren auszuführen, um die angeforderten Daten mit dem zweiten Netzwerkelement zu synchronisieren.

11. Vorrichtung nach einem der Ansprüche 8 bis 10, die ferner Folgendes umfasst:
ein Ausnahmebedingungshandhabungsmodul (280), das dazu eingerichtet ist, bei Auftreten einer Ausnahmebedingung während des Ausführens des ersten Nachrichtenverarbeitungsverfahrens eine vorkonfigurierte Korrespondenzbeziehung zwischen Ausnahmebedingungscodes und Ereignisnummern abzufragen, um eine vierte Ereignisnummer zu erfassen, die einem Ausnahmebedingungscode der Ausnahmebedingung dieser Zeit entspricht, und eine Nachricht, die die vierte Ereignisnummer trägt, zu senden.

12. Vorrichtung nach einem der Ansprüche 8 bis 10, die ferner Folgendes umfasst:
ein zweites Empfangsmodul, das dazu eingerichtet ist, eine Operationsanweisung zum Konfigurieren der Nachrichtenverteilungstabelle zu empfangen;
ein Konfigurationsmodul, das dazu eingerichtet ist, die Nachrichtenverteilungstabelle nach Maßgabe verschiedener Eingangsparameter zu konfigurieren, wobei Nachrichtenverarbeitungsverfahren in der Nachrichtenverteilungstabelle mit einer vorgegebenen Nachrichtenverarbeitungsspezifikation übereinstimmen; und
ein Lademodul, das dazu eingerichtet, ist, die vollständig konfigurierte Nachrichtenverteilungstabelle zu laden.

13. Vorrichtung nach Anspruch 12, wobei
das zweite Empfangsmodul ferner dazu eingerichtet ist, eine Operationsanweisung zum Modifizieren der Nachrichtenverteilungstabelle zu empfangen;
das Konfigurationsmodul ferner dazu eingerichtet ist, einen entsprechenden Eintrag in der Nachrichtenverteilungstabelle nach Maßgabe von Eingangsparametern zu modifizieren, wobei Nachrichtenverarbeitungsverfahren in der modifizierten Nachrichtenverteilungstabelle mit einer vorgegebenen Nachrichtenverarbeitungsspezifikation übereinstimmen; und
das Lademodul ferner dazu eingerichtet ist, die modifizierte Nachrichtenverteilungstabelle zu laden.

14. Datenerfassungssystem, das ein Netzwerkelement und einen dem Netzwerkelement entsprechenden Netzwerkmanagementserver umfasst, wobei
der Netzwerkmanagementserver die Vorrichtung nach einem der Ansprüche 8 bis 13 umfasst und dazu eingerichtet ist, von anderen Netzwerkelementen angeforderte Daten mit dem Netzwerkelement zu synchronisieren; und
das Netzwerkelement dazu eingerichtet ist, vom Netzwerkmanagementserver übertragene Daten zu empfangen.

## Revendications

1. Procédé d'acquisition de données, appliqué à plusieurs éléments de réseau pour la sauvegarde mutuelle de données, comprenant le fait :
de recevoir (S102), par un deuxième serveur de gestion de réseau correspondant à un deuxième élément de réseau, un premier message transmis par un premier serveur de gestion de réseau correspondant à un premier élément de réseau, où le premier message porte un premier numéro d'événement ;
de rechercher (S104), par le deuxième serveur de gestion de réseau, dans une table de distribution de messages préconfigurée pour acquérir un premier procédé de traitement de messages correspondant au premier numéro d'événement, où le premier procédé de traitement de messages personnalise un procédé de transmission pour acquérir des données à partir du premier élément de réseau ou d'autres éléments de réseau par le deuxième serveur de gestion de réseau ; et
d'exécuter (S106), par le deuxième serveur de gestion de réseau, le premier procédé de traitement de messages pour demander et acquérir des données à partir du premier serveur de gestion de réseau correspondant au premier élément de réseau ou des serveurs de gestion de réseau des autres éléments de réseau, et de synchroniser les données avec le deuxième élément de réseau ;
dans lequel la table de distribution de messages comprend des numéros d'événement (202) pour divers processus de transmission de données et des procédés de traitement de messages (203) devant être exécutés dans les processus correspondants, ainsi qu'au moins un élément de réseau de réception (204) représentant un récepteur de messages dans un processus suivant et au moins un numéro d'événement de transmission (205) devant être traité par le récepteur de messages.

2. Procédé selon la revendication 1, après avoir demandé et acquis des données à partir du premier serveur de gestion de réseau correspondant au premier élément de réseau ou aux autres éléments de réseau, comprenant en outre le fait : de traiter, par le deuxième serveur de gestion de réseau, les données demandées et d'effectuer une opération en magasin sur les données tra itées.

3. Procédé selon la revendication 1, après avoir acquis des données à partir du premier élément de réseau ou des autres éléments de réseau par le deuxième serveur de gestion de réseau, comprenant en outre le fait :
de déterminer, par le deuxième serveur de gestion de réseau, si la table de distribution de messages a un processus suivant, et d'acquérir à partir de la table de distribution de messages, par le deuxième serveur de gestion de réseau, une identification d'un élément de réseau de réception d'un deuxième message et un deuxième numéro d'événement d'un deuxième procédé de traitement de messages devant être effectué dans le processus suivant si la table de distribution de messages a le processus suivant ; et
de transmettre, par le deuxième serveur de gestion de réseau, le deuxième message à un serveur de gestion de réseau correspondant à l'identification de l'élément de réseau de réception, où le deuxième message porte le deuxième numéro d'événement.

4. Procédé selon la revendication 1, comprenant en outre le fait :
de recevoir, par le deuxième serveur de gestion de réseau, un troisième message portant un troisième numéro d'événement ;
de rechercher, par le deuxième serveur de gestion de réseau, dans la table de distribution de messages pour acquérir un troisième procédé de traitement de messages correspondant au troisième numéro d'événement, où le troisième procédé de traitement de messages comprenant un procédé de synchronisation de données demandées par le deuxième serveur de gestion de réseau avec le deuxième élément de réseau ; et
d'exécuter, par le deuxième serveur de gestion de réseau, le troisième procédé de traitement de messages pour synchroniser les données demandées avec le deuxième élément de réseau.

5. Procédé selon l'une quelconque des revendications 1 à 4, dans lequel, si une exception survient pendant l'exécution du premier procédé de traitement de messages par le deuxième serveur de gestion de réseau, le procédé comprend en outre le fait :
de se renseigner, par le deuxième serveur de gestion de réseau, sur une relation de correspondance préconfigurée entre des codes d'exception et des numéros d'événement pour acquérir un quatrième numéro d'événement correspondant à un code d'exception de l'exception de cette fois ; et
de transmettre, par le deuxième serveur de gestion de réseau, un message portant le quatrième numéro d'événement.

6. Procédé selon l'une quelconque des revendications 1 à 4, comprenant en outre le fait :
de recevoir une instruction opérationnelle pour configurer la table de distribution de messages ;
de configurer la table de distribution de messages en fonction de divers paramètres d'entrée, les procédés de traitement de messages dans la table de distribution de messages étant conformes à une spécification de traitement de messages prédéfinie ; et
de charger la table de distribution de messages entièrement configurée.

7. Procédé selon la revendication 6, comprenant en outre le fait :
de recevoir une instruction opérationnelle pour modifier la table de distribution de messages ;
de modifier une entrée correspondante dans la table de distribution de messages en fonction des paramètres d'entrée, où les procédés de traitement de messages dans la table de distribution de messages modifiée sont conformes à une spécification de traitement de messages prédéfinie ; et
de charger la table de distribution de messages modifiée.

8. Dispositif d'acquisition de données, qui est appliqué à plusieurs éléments de réseau pour la sauvegarde mutuelle de données et situé au niveau d'un deuxième serveur de gestion de réseau correspondant à un deuxième élément de réseau, comprenant :
un premier module de réception (210), qui est configuré pour recevoir un premier message transmis par un premier serveur de gestion de réseau correspondant à un premier élément de réseau, où le premier message porte un premier numéro d'événement ;
un premier module d'acquisition (220), qui est configuré pour rechercher dans une table de distribution de messages préconfigurée pour acquérir un premier procédé de traitement de messages correspondant au premier numéro d'événement, où le premier procédé de traitement de messages personnalise un procédé de transmission permettant d'acquérir des données à partir du premier élément de réseau ou d'autres éléments de réseau par le deuxième serveur de gestion de réseau ; et
un module d'exécution (230), qui est configuré pour exécuter le premier procédé de traitement de messages pour demander et acquérir des données à partir du premier serveur de gestion de réseau correspondant au premier élément de réseau ou des serveurs de gestion de réseau des autres éléments de réseau, et synchroniser les données avec le deuxième élément de réseau ;
dans lequel la table de distribution de messages comprend des numéros d'événement (202) pour divers processus de transmission de données et des procédés de traitement de messages (203) devant être exécutés dans les processus correspondants, ainsi qu'au moins un élément de réseau de réception (204) représentant un récepteur de messages dans un processus suivant et au moins un numéro d'événement de transmission (205) devant être traité par le récepteur du message.

9. Dispositif selon la revendication 8, comprenant en outre :
un module de détermination (240), qui est configuré pour déterminer si la table de distribution de messages a un processus suivant, et déclencher un deuxième module d'acquisition (250) si la table de distribution de messages a le processus suivant ;
le deuxième module d'acquisition (250), qui est configuré pour acquérir à partir de la table de distribution de messages une identification d'un élément de réseau de réception d'un deuxième message et un deuxième numéro d'événement d'un deuxième procédé de traitement de messages devant être effectué dans le processus suivant ; et
un module de transmission (260), qui est configuré pour transmettre le deuxième message au serveur de gestion de réseau correspondant à l'identification de l'élément de réseau de réception, où le deuxième message porte le deuxième numéro d'événement.

10. Dispositif selon la revendication 8, dans lequel
le premier module de réception (210) est en outre configuré pour recevoir un troisième message portant un troisième numéro d'événement ;
le premier module d'acquisition (220) est en outre configuré pour rechercher dans la table de distribution de messages pour acquérir un troisième procédé de traitement de messages correspondant au troisième numéro d'événement, où le troisième procédé de traitement de messages comprend un procédé de synchronisation de données demandées par le deuxième serveur de gestion de réseau avec le deuxième élément de réseau ; et
le dispositif comprend en outre un module de synchronisation (270), qui est configuré pour exécuter le troisième procédé de traitement de messages pour synchroniser les données demandées avec le deuxième élément de réseau.

11. Dispositif selon l'une quelconque des revendications 8 à 10, comprenant en outre :
un module de traitement d'exceptions (280), configuré pour se renseigner, lorsqu'une exception survient pendant l'exécution du premier procédé de traitement de messages, sur une relation de correspondance préconfigurée entre des codes d'exception et des numéros d'événement pour acquérir un quatrième numéro d'événement correspondant à un code d'exception de l'exception de cette fois, et transmettre un message portant le quatrième numéro d'événement.

12. Dispositif selon l'une quelconque des revendications 8 à 10, comprenant en outre :
un deuxième module de réception, qui est configuré pour recevoir une instruction opérationnelle pour configurer la table de distribution de messages ;
un module de configuration, qui est configuré pour configurer la table de distribution de messages en fonction de divers paramètres d'entrée, où les procédés de traitement de messages dans la table de distribution de messages sont conformes à une spécification de traitement de messages prédéfinie ; et
un module de chargement, qui est configuré pour charger la table de distribution de messages entièrement configurée.

13. Dispositif selon la revendication 12, dans lequel
le deuxième module de réception est en outre configuré pour recevoir une instruction opérationnelle pour modifier la table de distribution de messages ;
le module de configuration est en outre configuré pour modifier une entrée correspondante dans la table de distribution de messages en fonction des paramètres d'entrée, où les procédés de traitement de messages dans la table de distribution de messages modifiée sont conformes à une spécification de traitement de messages prédéfinie ; et
le module de chargement est en outre configuré pour charger la table de distribution de messages modifiée.

14. Système d'acquisition de données, comprenant un élément de réseau et un serveur de gestion de réseau correspondant à l'élément de réseau, dans lequel
le serveur de gestion de réseau comprend le dispositif selon l'une quelconque des revendications 8 à 13, et est configuré pour synchroniser les données demandées à d'autres éléments de réseau avec l'élément de réseau ; et
l'élément de réseau est configuré pour recevoir des données transmises par le serveur de gestion de réseau.
